# FASCICULE DE BREVET EUROPEEN

(11) **EP 3 899 224 B1**
(45) Date de publication et mention de la délivrance du brevet: **17.04.2024**
(21) Numéro de dépôt: 19823800.8
(22) Date de dépôt: 19.11.2019
(51) Int. Cl.: F01P 3/20, F02B 33/40, F02N 11/08

(54) **DISPOSITIF DE REFROIDISSEMENT D'UN TURBOCOMPRESSEUR D'UN MOTEUR HYBRIDE**
VORRICHTUNG ZUR KÜHLUNG EINES TURBOLADERS EINES HYBRIDMOTORS
DEVICE FOR COOLING A TURBOCHARGER OF A HYBRID ENGINE

(30) Priorité: 20.12.2018 FR 1873521
(43) Date de publication de la demande: 27.10.2021
(73) Titulaire: Stellantis Auto SAS, 78300 Poissy (FR)
(72) Inventeur: ANGELI, Michel, 92700 COLOMBES (FR); MOUCAN, Philippe, 91400 ORSAY (FR)
(86) Numéro de dépôt international: PCT/FR2019/052752
(87) Numéro de publication internationale: WO 2020/128174

(56) Documents cités:
- WO-A1-2016/007203
- JP-A- S59 221 441
- US-A1- 2012 123 666

## Description

### Domaine technique et objet de l'invention

L'invention concerne, de façon générale, le refroidissement du turbocompresseur d'un moteur, en particulier un moteur de véhicule automobile, à l'aide d'un circuit d'huile.

L'invention porte plus précisément sur la détermination de la durée maximale de l'arrêt du moteur d'un véhicule, notamment d'un véhicule automobile, l'arrêt du moteur entraînant l'arrêt de la circulation d'huile et de l'évacuation de la chaleur.

### Etat de la technique

De manière connue, un turbocompresseur est constitué d'une turbine et d'un compresseur reliés par un axe reposant sur deux paliers, l'un des paliers étant situé au niveau de la turbine tandis que l'autre palier est situé au niveau du compresseur. Les deux paliers permettent la rotation guidée de l'axe sans frottements.

Le turbocompresseur récupère les gaz d'échappement qui sortent du moteur et permet à la turbine reliée au compresseur d'air et placée à la sortie du collecteur d'échappement, d'être entraînée par les gaz d'échappement et d'effectuer une rotation. La rotation de la turbine entraine le compresseur, ce qui compresse l'air d'admission. Ce mouvement permet d'envoyer de l'air sous pression dans le circuit d'admission pour augmenter le remplissage du moteur, et obtenir une puissance supérieure qui, sans turbocompresseur, aurait nécessité une cylindrée supérieure.

Cependant, la turbine et le carter de la turbine chauffent fortement le palier ainsi que le côté de l'axe se trouvant du côté de la turbine. L'axe reliant la turbine au compresseur et les deux paliers sont alors lubrifiés et refroidis par une circulation d'huile afin d'éviter tout surchauffage.

Mais, lorsque le moteur s'arrête, la circulation d'huile s'arrête également, l'évacuation de chaleur ne peut alors plus continuer.

En revanche, lorsque la turbine et le carter de la turbine sont très chauds, ils vont continuer à dissiper de la chaleur et la température de l'huile présente entre l'axe et le palier de la turbine va augmenter fortement. Il se crée alors un dépôt de matière abrasive qui s'accroît à chaque arrêt du moment, ce procédé étant appelé cokéfaction.

Or, le turbocompresseur peut être endommagé par ce dépôt de matière abrasive, ce qui peut entraîner des désagréments pouvant nuire au moteur comme une consommation excessive d'huile, un grippage du mouvement de rotation de la turbine ou la détérioration d'un des éléments du turbocompresseur.

En outre, sur les motorisations hybrides le moteur peut s'arrêter chaque fois que le véhicule s'arrête, le nombre d'arrêts du moteur est donc important.

De manière connue, il existe un dispositif de contrôle du refroidissement du moteur capable d'assurer convenablement le contrôle de la température du liquide de refroidissement d'un moteur sans perdre de carburant. Il s'agit d'une unité de contrôle électronique commandant l'alimentation électrique pour entraîner une pompe à eau motorisée afin de réguler le débit du liquide de refroidissement à évacuer de la pompe à eau et contrôler l'alimentation électrique pour alimenter un réchauffeur régulant l'ouverture d'un élément de soupape d'un thermostat électronique et ainsi contrôler la température du liquide de refroidissement.

L'unité de contrôle électronique corrige la puissance électrique alimentant le réchauffeur en fonction de la différence entre une valeur détectée de la température du liquide de refroidissement et une consigne de valeur de température. La correction appliquée est donc en fonction de l'écart de température du liquide de refroidissement avant et après le passage dans le moteur, elle est comparée à une valeur de référence.

On connaît par le document CN107893697 un procédé de commande électronique de l'ouverture d'un thermostat contrôlant la température du moteur. Dans ce cas, un degré précis d'ouverture du thermostat est contrôlé, afin d'aboutir à une température de fonctionnement ciblée. Plusieurs éléments sont alors pris en compte comme la température du liquide de refroidissement, la climatisation, la vitesse du véhicule.

Cependant une telle solution présente des inconvénients car elle nécessite l'utilisation d'un refroidissement additionnel à l'aide d'une pompe à eau électrique ou d'une pompe à huile électrique. Elle ne tient pas compte du fait que le roulement de l'axe joignant le compresseur à la turbine d'un turbocompresseur est refroidi avec de l'huile. A chaque fois que le moteur s'arrête, le débit d'huile s'arrête également, et l'huile restante est exposée à la cokéfaction. De plus, lorsque la fonction d'arrêt et de démarrage d'un véhicule est activée, le risque de cokéfaction est encore plus élevé.

On connaît du document WO2016007203A1 un procédé de régulation thermique d'un turbocompresseur pour un moteur comprenant un système de gestion d'arrêt et de redémarrage automatique de ce moteur.

L'invention vise donc à résoudre ces inconvénients en proposant un procédé de régulation thermique d'un turbocompresseur d'un moteur permettant de prédéfinir un arrêt planifié déclenché par la fonction d'arrêt et de démarrage dans certaines conditions de température.

### Présentation générale de l'invention

Pour parvenir à ce résultat, la présente invention concerne un de régulation thermique d'un turbocompresseur, le turbocompresseur étant destiné à suralimenter un moteur à combustion interne de véhicule en air comprimé, le moteur comprenant un système de gestion d'arrêt et de redémarrage automatique de ce moteur, le turbocompresseur comprenant une turbine traversée par des gaz d'échappement et comprenant un premier palier lubrifié par une circulation d'huile, caractérisé en ce que ledit procédé comprend :
la détermination d'un seuil de température du premier palier à partir duquel se produit la cokéfaction de l'huile,
la détermination d'une durée maximale de l'arrêt du moteur lors d'une demande d'arrêt automatique du moteur en dessous de laquelle on n'atteint pas le seuil de température à partir duquel se produit la cokéfaction de l'huile,
si ladite durée maximale de l'arrêt du moteur est comprise dans une échelle de temps comprenant une valeur inférieure et une valeur supérieure, le procédé comprend l'arrêt automatique du moteur est autorisé, ladite valeur inférieure et ladite valeur supérieure étant prédéfinies,
   - suite à l'arrêt automatique du moteur, le redémarrage automatique du moteur si la durée maximale est dépassée.

Selon un mode de réalisation, ladite durée maximale de l'arrêt déterminé du moteur comprend une durée limite, prédéfinie, en-dessous de laquelle l'arrêt automatique du moteur est interdit.

Selon un mode de réalisation, au-delà de ladite valeur supérieure, le procédé comprend l'arrêt et le redémarrage automatique du moteur sont toujours autorisés.

Selon un mode de réalisation, ladite durée maximale de l'arrêt du moteur est mémorisée par une unité électronique de commande du moteur et en ce que le procédé comprend le redémarrage automatique du moteur lorsque le temps d'arrêt du moteur atteint la valeur de mémorisée.

Selon un mode de réalisation, l'application d'une cartographie à deux dimensions prédéfinie détermine la durée maximale de l'arrêt du moteur, en fonction de la température de l'huile dans le moteur et d'une température représentative de la température du palier de la turbine.

Selon un mode de réalisation, la cartographie à deux dimensions comprend la température de l'huile dans le moteur sur un premier axe et la température du premier palier de la turbine sur un deuxième axe.

Selon un mode de réalisation, la cartographie à deux dimensions comprend la température de l'huile dans le moteur sur un premier axe et la température de gaz d'échappement sur un deuxième axe.

Selon un mode de réalisation, la température des gaz d'échappement est mesurée après filtration.

La présente invention vise aussi véhicule automobile comprenant un moteur à combustion interne comportant un turbocompresseur, ainsi qu'un calculateur de contrôle moteur configuré pour mettre en oeuvre le procédé de régulation thermique dudit turbocompresseur tel que brièvement décrit ci-dessus.

### Présentation des dessins

D'autres caractéristiques et avantages de l'invention apparaîtront à la lecture de la description détaillée des modes de réalisation de l'invention, donnés à titre d'exemple uniquement, et en référence au dessin qui montre :

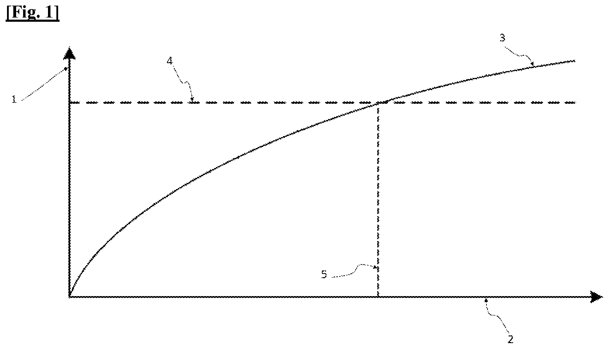

[Fig. 1] représente un graphique montrant l'évolution de la température de palier du côté de la turbine en fonction du temps, selon l'invention.

### Description détaillée de l'invention

La figure 1 montre un graphique représentant la température 1 du palier de la turbine d'un turbocompresseur d'un moteur à combustion interne de véhicule, le moteur comprenant un système de gestion d'arrêt et de redémarrage automatique de ce moteur , en fonction du temps à partir de l'arrêt du moteur 2. On constate que la courbe 3 obtenue présente une évolution de la température du palier de la turbine qui est progressive et atteint en un temps limite 5 une température critique 4 à partir de laquelle la cokéfaction de l'huile au niveau dudit palier de ladite turbine du turbocompresseur peut se produire. Généralement, le temps limite 5 est de l'ordre de 30 secondes.

Une cartographie à deux dimensions avec la température de l'huile du moteur sur un premier axe et la température du palier de la turbine sur un deuxième axe permet de définir une durée maximale de l'arrêt du moteur, désignée Dₘₐₓ, en dessous de laquelle on n'atteint pas la température critique 4 du palier de la turbine.

Lors d'une demande d'une demande d'arrêt automatique du moteur, la valeur de Dₘₐₓ, est calculée.

Selon la valeur de Dₘₐₓ, le procédé de régulation thermique selon l'invention autorise ou interdit l'arrêt ou le redémarrage du moteur.

Plus précisément, si Dₘₐₓ est inférieur ou égal à une valeur du temps préalablement définie, désignée D₁, les arrêts automatiques du moteur sont interdits sauf si l'utilisateur décide de couper lui-même le moteur de son véhicule.

En effet, D₁ désigne une valeur du temps pour laquelle il existe un risque élevé d'atteindre la température critique 4 trop rapidement. Il est alors inintéressant, d'un point de vue énergétique, de couper puis de rallumer le moteur quelques secondes plus tard.

Si Dₘₐₓ est compris entre deux valeurs, respectivement inférieure et supérieure, prédéfinies, désignées D₂ et D₃, les arrêts automatiques du moteur sont autorisés.

Lors de l'arrêt du moteur, la valeur de Dₘₐₓ est enregistrée dans la mémoire de l'unité de contrôle électronique du véhicule.

Après l'arrêt automatique du moteur, la fonction de gestion de l'arrêt et du redémarrage du moteur redémarre le moteur lorsque le temps à partir duquel le moteur a été arrêté atteint la valeur de Dₘₐₓ enregistrée. Ainsi, la température du palier de la turbine n'atteint pas la température critique 4 à laquelle se produit la cokéfaction de l'huile.

Enfin, si la valeur de Dₘₐₓ est supérieure à la valeur supérieure D₃, l'arrêt du moteur et son redémarrage sont toujours autorisés.

Selon une variante de l'invention, la cartographie à deux dimensions comprend la température des gaz d'échappement, filtrée ou non, sur le deuxième axe.

La fonction de gestion de l'arrêt et du redémarrage du moteur détermine donc l'autorisation ou l'interdiction de l'arrêt du moteur selon que la température du palier dépasse ou non la valeur de la température critique 4.

## Revendications

1. Procédé de régulation thermique d'un turbocompresseur, le turbocompresseur étant destiné à suralimenter un moteur à combustion interne de véhicule en air comprimé, le moteur comprenant un système de gestion d'arrêt et de redémarrage automatique de ce moteur, le turbocompresseur comprenant une turbine traversée par des gaz d'échappement et comprenant un palier lubrifié par une circulation d'huile, ledit procédé comprend :
- la détermination d'un seuil de température du palier à partir duquel se produit la cokéfaction de l'huile,
- la détermination d'une durée maximale de l'arrêt du moteur lors d'une demande d'arrêt automatique du moteur en dessous de laquelle on n'atteint pas le seuil de température à partir duquel se produit la cokéfaction de l'huile, et est **caractérisé en ce qu'**il comprend
- si ladite durée maximale de l'arrêt du moteur est comprise dans une échelle de temps comprenant une valeur inférieure et une valeur supérieure, l'arrêt automatique du moteur est autorisé, ladite valeur inférieure et ladite valeur supérieure étant prédéfinies,
- suite à l'arrêt automatique du moteur, le redémarrage automatique du moteur si la durée maximale est dépassée.

2. Procédé de régulation thermique d'un turbocompresseur selon la revendication 1, **caractérisé en ce que** ladite durée maximale de l'arrêt du moteur déterminée comprend une durée limite, prédéfinie, en-dessous de laquelle l'arrêt automatique du moteur est interdit.

3. Procédé de régulation thermique d'un turbocompresseur selon la revendication 1 ou la revendication 2, **caractérisé en ce que**, au-delà de ladite valeur supérieure, l'arrêt et le redémarrage automatique du moteur sont toujours autorisés.

4. Procédé de régulation thermique d'un turbocompresseur selon l'une des revendications précédentes, **caractérisé en ce que** ladite durée maximale de l'arrêt du moteur est mémorisée par une unité électronique de commande du moteur et **en ce que** le procédé comprend le redémarrage automatique du moteur lorsque le temps d'arrêt du moteur atteint la valeur de mémorisée.

5. Procédé de régulation thermique d'un turbocompresseur selon l'une des revendications précédentes, **caractérisé en ce que** l'application d'une cartographie à deux dimensions prédéfinie détermine la durée maximale de l'arrêt du moteur, en fonction de la température de l'huile dans le moteur et d'une température représentative de la température du premier palier de la turbine.

6. Procédé de régulation thermique d'un turbocompresseur selon la revendication précédente, **caractérisé en ce que** la cartographie à deux dimensions comprend la température de l'huile dans le moteur sur un premier axe et la température du palier de la turbine sur un deuxième axe.

7. Procédé de régulation thermique d'un turbocompresseur selon la revendication 5, **caractérisé en ce que** la cartographie à deux dimensions comprend la température de l'huile dans le moteur sur un premier axe et la température de gaz d'échappement sur un deuxième axe.

8. Procédé de régulation thermique d'un turbocompresseur selon la revendication précédente, dans lequel la température des gaz d'échappement est mesurée après filtration.

9. Véhicule automobile comprenant un moteur à combustion interne comportant un turbocompresseur, ainsi qu'un calculateur de contrôle moteur configuré pour mettre en oeuvre le procédé de régulation thermique d'un turbocompresseur selon l'une des revendications précédentes.

## Patentansprüche

1. Verfahren zur thermischen Regelung eines Turboladers, wobei der Turbolader dazu bestimmt ist, einen Verbrennungsmotor eines Fahrzeugs mit komprimierter Luft aufzuladen, wobei der Motor ein System zum automatischen Stoppen und Neustarten dieses Motors umfasst, wobei der Turbolader eine Turbine umfasst, durch die Abgase geleitet werden Gase zirkulieren in einem durch Ölzirkulation geschmierten Lager, wobei das Verfahren Folgendes umfasst:
- Bestimmen Sie eine Lagertemperaturschwelle, oberhalb derer eine Verkokung des Öls auftritt.
- die Bestimmung einer maximalen Motorabschaltdauer während einer Anforderung zur automatischen Motorabschaltung, unterhalb derer die Temperaturschwelle liegt, ab der eine Verkokung des Öls auftritt, und ist **dadurch gekennzeichnet, dass** sie umfasst:
- Wenn die maximale Motorabschaltzeit in einer Zeitskala mit einem unteren und oberen Wert enthalten ist, ist eine automatische Motorabschaltung zulässig, wobei der untere und obere Wert vordefiniert ist.
- nach automatischer Motorabschaltung automatischer Motorneustart bei Überschreitung der maximalen Dauer.

2. Verfahren zur thermischen Steuerung eines Turboladers nach Anspruch 1, **dadurch gekennzeichnet, dass** die ermittelte maximale Motorabschaltdauer eine vordefinierte Grenzdauer umfasst, unterhalb derer eine automatische Motorabschaltung verboten ist.

3. Verfahren zur thermischen Regulierung eines Turboladers nach Anspruch 1 oder Anspruch 2, **dadurch gekennzeichnet, dass** das automatische Stoppen und Neustarten des Motors immer oberhalb des oberen Wertes zulässig ist.

4. Verfahren zur thermischen Regelung eines Turboladers nach einem der vorhergehenden Ansprüche, **dadurch gekennzeichnet, dass** die maximale Dauer des Motorstopps von einem elektronischen Motorsteuergerät gespeichert wird und dass das Verfahren einen automatischen Neustart des Motors beim Stoppen des Motors umfasst. die Zeit ist der gespeicherte Wert erreicht.

5. Verfahren zur thermischen Steuerung eines Turboladers nach einem der vorhergehenden Ansprüche, **dadurch gekennzeichnet, dass** die Anwendung eines vordefinierten zweidimensionalen Kennfelds die maximale Dauer der Motorabschaltung in Abhängigkeit von der Motortemperatur und einer die Temperatur repräsentierenden Temperatur bestimmt der ersten Stufe der Turbine ist repräsentativ.

6. Verfahren zur thermischen Steuerung eines Turboladers nach dem vorhergehenden Anspruch, **dadurch gekennzeichnet, dass** die zweidimensionale Abbildung die Temperatur des Öls im Motor auf einer ersten Achse und die Temperatur des Turbinenlagers auf einer zweiten Achse umfasst.

7. Verfahren zur thermischen Steuerung eines Turboladers nach Anspruch 5, **dadurch gekennzeichnet, dass** das zweidimensionale Bild die Temperatur des Motoröls auf einer ersten Achse und die Temperatur des Abgases auf einer zweiten Achse umfasst.

8. Verfahren zur thermischen Steuerung eines Turboladers nach dem vorhergehenden Anspruch, bei dem die Temperatur des Abgases nach der Filtration gemessen wird.

9. Kraftfahrzeug, das mit einem Verbrennungsmotor ausgestattet ist, der einen Turbolader und einen Motorsteuerrechner umfasst, der zur Umsetzung des thermischen Steuerverfahrens eines Turboladers nach einem der vorhergehenden Ansprüche konfiguriert ist.

## Claims

1. Method for thermal regulation of a turbocharger, the turbocharger being intended to charge an internal combustion engine of a vehicle with compressed air, the engine comprising a system for automatically stopping and restarting this engine, the turbocharger comprising and comprising a turbine through which exhaust gases circulate a bearing lubricated by oil circulation, the method comprising:
- determine a bearing temperature threshold above which coking of the oil occurs,
- the determination of a maximum engine shutdown duration during a request for automatic engine shutdown, below which the temperature threshold above which coking of the oil occurs, and is **characterized in that** it includes:
- If the maximum motor shutdown time is included in a time scale with a lower and upper value, automatic motor shutdown is allowed, with the lower and upper values predefined.
- after automatic engine shutdown, automatic engine restart if the maximum duration is exceeded.

2. Method for thermal control of a turbocharger according to claim 1, **characterized in that** the determined maximum engine shutdown duration comprises a predefined limit duration, below which automatic engine shutdown is prohibited.

3. Method for thermal regulation of a turbocharger according to claim 1 or claim 2, **characterized in that** automatic stopping and restarting of the engine are always authorized above said upper value.

4. Method for thermal regulation of a turbocharger according to one of the preceding claims, **characterized in that** the maximum duration of stopping the engine is memorized by an electronic engine control unit and that the method comprises an automatic restart of the engine when stopping the engine, the time is reached stored value.

5. Method for thermal control of a turbocharger according to one of the preceding claims, **characterized in that** the application of a predefined two-dimensional map determines the maximum duration of engine shutdown as a function of the engine temperature and A temperature which represents the temperature of the first stage of the turbine is representative.

6. Method for thermal control of a turbocharger according to the preceding claim, **characterized in that** the two-dimensional mapping includes the temperature of the oil in the engine on a first axis and the temperature of the turbine bearing on a second axis.

7. Method for thermal control of a turbocharger according to claim 5, **characterized in that** the two-dimensional image includes the temperature of the engine oil on a first axis and the temperature of the exhaust gas on a second axis.

8. Method for thermal control of a turbocharger according to the preceding claim, in which the temperature of the exhaust gas is measured after filtration.

9. Motor vehicle equipped with an internal combustion engine comprising a turbocharger and an engine control computer configured to implement the thermal control method of a turbocharger according to one of the preceding claims.
